## Europäisches Patentamt
## European Patent Office
## Office européen des brevets

(11) Publication number: **0 005 992**
**B1**

(12) **EUROPEAN PATENT SPECIFICATION**

(45) Date of publication of patent specification: **18.11.81**

(51) Int. Cl.³: **C 01 B 33/24** //C04B **31/04**

(21) Application number: **79300984.6**

(22) Date of filing: **30.05.79**

(54) Method of preparing microfibrous tricalcium silicate dihydrate.

(30) Priority: **03.06.78 GB 2631378**

(43) Date of publication of application:
**12.12.79 Bulletin 79/25**

(45) Publication of the grant of the European patent:
**18.11.81 Bulletin 81/46**

(84) Designated Contracting States:
**BE DE FR GB IT LU NL SE**

(56) References cited:
**US - A - 3 - 115 - 391**

**CHEMICAL ABSTRACTS, vol. 90 nr. 2 1—4, 7
8th January 1979, page 129, right-hand column,
abstract nr. 8499y
Columbus, Ohio, USA**

(73) Proprietor: **TURNER & NEWALL LIMITED**
**20 St. Mary's Parsonage**
**Manchester M3 2NL (GB)**

(72) Inventor: **Atkinson, Alan William**
**94 Elmpark Grove**
**Rochdale, Lancs. (GB)**
Inventor: **Hall, Alan James**
**9 Green Vale**
**Rochdale, Lancs. (GB)**
Inventor: **Lancaster, Janet Margaret**
**64 Whitegate Dearnley**
**Nr. Littleborough Rochdale, Lancs. (GB)**

(74) Representative: **Newman, Dennis Daniel Ernest,
et al,**
**20 St. Mary's Parsonage**
**Manchester M3 2NL (GB)**

Method of preparing microfibrous tricalcium silicate dihydrate

This invention relates to the preparation of tricalcium silicate dihydrate in microfibrous form.

Tricalcium silicate dihydrate in microfibrous form can be prepared by heating at a temperature above the normal boiling point (and therefore under elevated pressure) an aqueous suspension of anhydrous tricalcium silicate or an aqueous suspension of a mixture of a less basic hydrated calcium silicate and calcium hydroxide.

The present invention makes use of a cheaper starting material, namely, crystalline silica in the form of quartz.

It has already been proposed in United States Patent US—A—3 115 391 for J. P. Leineweber to make tricalcium silicate dihydrate in a form useful as a flatting agent for clear lacquers, by heating above the normal boiling point a suspension of silica (preferably amorphous, but alternatively crystalline) in an aqueous suspension of calcium hydroxide, the molar ratio $Ca(OH)_2$ : $SiO_2$ in the suspension being in the range 2.7:1 to 3.3:1. The suspension which is heated may include a small proportion of sodium fluoride as mineralising agent (an agent to promote crystallinity in the product). The process of US Patent US—A—3 115 391 does not, however, yield a microfibrous product but a granular one.

According to the present invention, in the preparation of crystalline tricalcium silicate dihydrate by heating above the normal boiling point a suspension of quartz in an aqueous suspension of calcium hydroxide, an alkali metal hydroxide in the dissolved state is included in the suspension which is heated so as to obtain a microfibrous product of aspect ratio (i.e. ratio of length:diameter) at least 100:1. The molar ratio $Ca(OH)_2$ : $SiO_2$ may be in the range 2.5:1 to 4:1. From the resulting aqueous suspension of microfibrous product, water can be separated in liquid form (as by filtration) and the product can then be dried. For some purposes, however, the aqueous suspension of product can, preferably after washing by decantation, be used direct.

By including in the suspension that is heated an alkali metal hydroxide, particularly sodium or potassium hydroxide, lengthwise fibre growth of the product is promoted. In this way a product with fibres of desirably high aspect ratio is obtained, in particular a product in which the fibres have an aspect ratio of 100:1 or more, a useful property which it has not hitherto been possible to obtain consistently according to prior art procedures. The alkali metal hydroxide is suitably included in an amount forming 0.5—15% by weight of the total solids present in the aqueous suspension that is heated.

The quartz that is employed can be kept in suspension by gentle stirring; too vigorous stirring reduces the yield of product in microfibrous form. The concentration of quartz in the suspension is preferably in the range 0.5—5% by weight.

The temperature at which the suspension is heated is preferably at least 170°C, and temperatures in the range 170—270°C are particularly preferred.

The pressure employed is conveniently simply that of saturated steam at the temperature employed.

The microfibrous product obtained by the method of the invention is useful as a substitute for asbestos, for example as reinforcement for thermoplastics (e.g. PVC, polypropylene, nylon) and thermosetting materials (e.g. polyesters, epoxy resins, phenol-formaldehyde resins), as insulation, as catalyst support material, and as web-former in paper making processes and the Hatschek process for making cementitious sheet products.

The invention is further illustrated by the following Example.

Example

Quartz flour (10g; 98.6% passing $251\mu$, 50% passing $53\mu$ aperture sieve) was added to an aqueous suspension of calcium hydroxide (41g) in aqueous sodium hydroxide solution (1,000 ml, containing 0.7g NaOH) in a 1.1-litre autoclave fitted with a paddle stirrer conforming closely to the walls and base of the vessel, with a clearance of about 5mm. The autoclave was closed and the paddle was rotated (60rpm) to give gentle agitation. During 2 hours, the temperature was raised to 260°C under saturated steam pressure, and was kept at 260°C for 4 hours. During 1.5 hours, with stirring continued at 60rpm, the autoclave was cooled to room temperature by means of a cooling coil and the product (in the form of a slurry) was washed with water. Removal of water by filtration gave the solid product, which was dried at 80°C for 12 hours. Samples of the product (an off-white sold) were prepared for electron microscopy by gently crushing the solid under water, shaking and allowing drops of the resulting aqueous suspension to evaporate on conventional specimen grids. The fibres present (estimated to form 90% of the product) were of mean length $85\mu$, and had a mean aspect ratio of about 500:1.

The fibres were not appreciably affected on standing for 3 months in an aqueous medium of pH 12.5, such as is formed in the manufacture of cementitious sheet products from aqueous cement slurries. When used in the Hatschek process for making such sheet products, the fibres gave rise to an excellent web when incorporated in a slurry-forming composition comprising ball clay (15% by weight), 10mm. carbon fibre reinforcement (1.4%), cellulose pulp (1.5%) and tricalcium silicate dihydrate fibre (3.5%), the balance being Portland cement. In the absence of the tricalcium silicate dihydrate fibre, to obtain an equivalent web-forming capacity required an increase in the (flammable) cellulose pulp content to about 3% by weight.

## Claims

1. A method for the preparation of crystalline tricalcium silicate dihydrate by heating above the normal boiling point a suspension of quartz in an aqueous suspension of calcium hydroxide, the molar ratio $Ca(OH)_2$ : $SiO_2$ in the suspension being in the range 2.5:1 to 4:1, characterised by including in the suspension which is heated an alkali metal hydroxide in the dissolved state, to promote the formation of microfibrous tricalcium silicate dihydrate crystals of aspect ratio at least 100:1.

2. A process according to claim 1, in which the alkali metal hydroxide is sodium hydroxide.

3. A process according to claim 1, in which the alkali metal hydroxide is postassium hydroxide.

4. A process according to claim 1, 2 or 3, in which the content of quartz in the suspension is in the range 0.5—5% by weight.

## Revendications

1. Procédé de préparation de silicate tricalcique dihydraté cristallin par chauffage d'une suspension de quartz dans une suspension aqueuse d'hydroxyde de calcium au delà du point d'ébullition normal, le rapport molaire $Ca(OH)_2$:$SiO_2$ de la suspension tombant dans l'intervalle de 2,5:1 à 4:1, caractérisé en ce qu'on inclut dans la suspension qui est chauffée un hydroxyde de métal alcalin à l'état dissous pour favoriser la formation de cristaux de silicate tricalcique dihydraté microfibreux présentant un rapport d'aspect d'au moins 100:1.

2. Procédé suivant la revendication 1, caractérisé en ce que l'hydroxyde de métal alcalin est l'hydroxyde de sodium.

3. Procédé suivant la revendication 1, caractérisé en ce que l'hydroxyde de métal alcalin est l'doxyde de potassium.

4. Procédé suivant la revendication 1, 2 ou 3, caractérisé en ce que la teneur en quartz de la suspension est de 0,5 à 5% en poids.

## Patentansprüche

1. Verfahren zur Herstellung von kristallinem Tricalcium-silikat-Dihydrat durch Erhitzen einer Suspension aus Quartz in einem wäßrigen Medium von Calciumhydroxid auf eine Temperatur oberhalb des normalen Siedepunktes, wobei das Molarverhältnis $Ca(OH)_2$:$SiO_2$ in der Suspension zwischen 2,5:1 und 4:1 liegt, dadurch gekennzeichnet, daß in der erhitzten Suspension ein Alkalimetallhydroxid in gelöstem Zustand zur Beschleunigung der Buildung von mikrofasrigen Tricalcium-silikatdihydratkristallen mit einem Aspekt-Ratio von wenigstens 100:1 verwendet wird.

2. Verfahren nach Anspruch 1, dadurch gekennzeichnet, daß das verwendete Alkalimetallhydroxid aus Natriumhydroxid besteht.

3. Verfahren nach Anspruch 1, dadurch gekennzeichnet, daß das verwendete Alkalimetallhydroxid aus Kaliumhydroxid besteht.

4. Verfahren nach Anspruch 1, 2 oder 3, dadurch gekennzeichnet, daß ein Gehalt an Quartz in der Suspension zwischen 0,5 und 5 Gew.-% eingehalten wird.